# EUROPÄISCHE PATENTANMELDUNG

(11) **EP 2 072 172 A1**
(43) Veröffentlichungstag der Anmeldung: **24.06.2009**
(21) Anmeldenummer: 08022126.0
(22) Anmeldetag: 19.12.2008
(51) Int. Cl.: B23K 11/31

(54) **Werkzeughalter**

(30) Priorität: 20.12.2007 DE 102007061750
(71) Anmelder: Robert Bosch GmbH, 70469 Stuttgart (DE)
(72) Erfinder: Schneider, Jürgen, 63831 Wiesen (DE)
(74) Vertreter: Thürer, Andreas

(57) **Zusammenfassung**

In der Praxis kommt es häufig vor, dass zur Durchführung von kontrollierten Bewegungen beispielsweise bei Schweißzangen, eine Vielzahl von Bewegungssensoren und Steuermechanismen erforderlich sind. Die Aufgabe der Erfindung besteht in der Realisierung einer Lösung, welche bei geringem elektrischen und mechanischem Aufwand eine möglichst effiziente und preiswerte Bewegungskontrolle einer Schweißzange ermöglicht.

Die Erfindung löst diese Aufgabe unter Verwendung von mechanischen Wegbegrenzungsmitteln, mittels derer bei einer Schwenkbewegung die Schwenkbewegung begrenzt ist.

Vorteilhaft hierbei ist der robuste Aufbau und die Vermeidung störanfälliger Elektronik und Sensorik.

## Beschreibung

Die Erfindung betrifft eine Vorrichtung zur Bearbeitung von Werkstücken sowie ein Verfahren zum Betrieb einer solchen Vorrichtung gemäß den unabhängigen Ansprüchen.

Die Vorrichtung dient zum mechanischen Fügen von zu verbindenden Fügeteilen und besteht in der Regel aus einer Rahmenkonstruktion mit zwei Auslegern, wobei an den Auslegern Fügewerkzeuge befestigt sind. Derartige Vorrichtungen werden beispielsweise im Maschinen- und Fahrzeugbau und in anderen Branchen eingesetzt. Die Bearbeitung der Fügeteile erfolgt in der Regel derart, dass diese mittels eines Niet-, Klebe-, Press- oder Clinschvorganges verbunden werden. Ein weiteres Anwendungsfeld der Vorrichtung ist die Schweißtechnik, insbesondere die Widerstandsschweißtechnik. Die erwähnten Fügewerkzeuge stellen in diesem speziellen Falle Schweißelektroden dar, welche an den Auslegern angeordnet sind, wobei die Ausleger beweglich angeordnet sind und relativ zueinander bewegt werden können. Zwischen den Werkzeugen wird im Rahmen der Bearbeitungsschritte in der Regel ein Blechpaket als Fügeteil eingeklemmt und durch Einbringung eines Schweißstromes zusammengefügt.

Für den Antrieb der Ausleger sind beispielsweise elektrische Antriebe vorgesehen, welche die mittels einer Schwenkachse gelagerten Ausleger in Bewegung versetzen können. Die Offenlegungsschrift DE 103 44 056 B4 beispielsweise zeigt eine Schweißzange mit fixierter Ausgleichsvorrichtung. Die Schweißzange umfasst zwei Schweißzangenschenkel mit jeweils einer Elektrode, welche derart mittels eines Exzenters gekoppelt sind, dass jeder Schweißzangenschenkel eine Bewegung ausführen kann. Weiter sind umfasst Mittel zum Antrieb des Exzenters, wobei das Exenterelement beim Erreichen mindestens eines vorbestimmten Drehwinkels die Schweißzangenschenkel zum Schweißen justiert oder der Exzenter beim Erreichen mindestens eines weiteren vorbestimmten Drehwinkels die Schweißzangenschenkel zum Verfahren der Schweißzangen fixiert. Die Schweißzange ist gedacht zur Verwendung an einem Roboterarm, wobei kein zusätzlicher Ausgleichsantrieb zur Realisierung einer Anstellbewegung an ein zu schweißendes Blech erforderlich ist.

Die Patentschrift DE 102 850 062 B4 zeigt eine Schweißzange zum Elektropunktschweißen sowie ein Verfahren zum Steuern des Elektrodenausgleichhubs. Schweißzangen werden üblicherweise zunächst mit einer relativ großen Elektrodenöffnungsweite in Richtung eines zu verschweißenden Werkstückes bewegt. Anschließend wird ein noch bestehender Abstand der Gegenelektrode vom Werkstück reduziert, indem die Gegenelektrode mittels eines Ausgleichsantriebs bis zum Anlagekontakt am Werkstück gebracht wird. Diese Bewegung wird als Ausgleichshub bezeichnet. Die hier gezeigte Erfindung arbeitet mit einem Bewegungssensor, der den Ausgleichshub als wegabhängiges Signal erfasst und einer Steuerung zuführt und bei erkanntem Stillstand der Elektrode den Ausgleichsantrieb abschaltet.

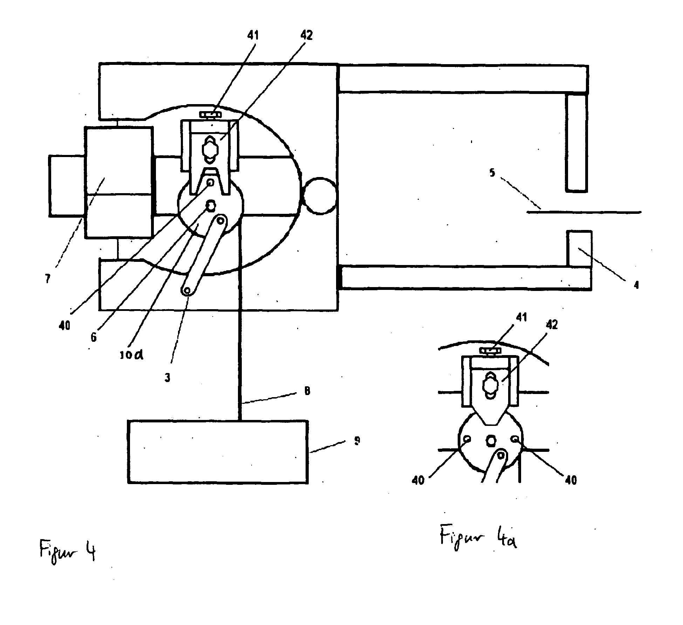

In der französischen Offenlegungsschrift 2822743 sind ebenfalls zahlreiche Beispiele für die Realisierung von Schweißzangen bzw. Vorrichtungen zur Bearbeitung von Werkstücken gezeigt. In Figur 4 beispielsweise ist gezeigt, wie der Ausgleichsantrieb mittels eines Motors und einer Kurbel realisiert ist. Eine Drehung des Rotors bewirkt hierbei die Drehung der Anordnung um ein zentrales Schwenklager.

Befindet sich nun zwischen den Schweißelektroden ein Werkstück und soll die Anordnung des Ausgleichsantriebes an das Werkstück angefahren werden, so ist es erforderlich den Ausgleichsantrieb anzusteuern und den Bewegungsvorgang zu überwachen. Ist das Werkstück beispielsweise zu weit von den Elektroden entfernt, so führt dies dazu, dass eine volle Drehung des Ausgleichsantriebes nicht ausreicht, um eine Elektrode an das Werkstück anzustellen. Der Motor würde in diesem Falle quasi endlos drehen, da die Steuerung eine Anstellung an das Werkstück nicht realisieren kann. Während einer vollen Umdrehung des Motors vollzieht die Elektrode eine Auf/Ab- Bewegung. Dies bedeutet, dass man bei Ansteuerung des Ausgleichantriebs mit positivem Moment die Elektrode sowohl vorwärts, als auch rückwärts bewegen kann. Zur Realisierung einer definierten Bewegung sind daher Zusatzsensoren für den Ansteuervorgang erforderlich, welche die gegenwärtige Bewegungsrichtung der Elektroden erfassen, um diese an die Steuerung zu übermitteln. Die Steuerung kann dann aus dem Moment des Antriebes und der erfassten Bewegungsrichtung Rückschlüsse auf die momentane Lage der Vorrichtung relativ zum Werkstück stellen.

Derartige Konstruktionen sind jedoch wegen der erforderlichen Sensorik und steuerseitigen Softwareanforderungen fehleranfälliger, weil gerade beim Betrieb von robotergeführten Schweißzangen hohe Beschleunigungen und Kräfte auf die Sensorik einwirken, welche zu Ungenauigkeiten oder Beschädigungen führen können.

Es ist die Aufgabe der Erfindung eine Vorrichtung zur Bearbeitung von Werkstücken sowie ein Verfahren zum Betrieb einer solchen Vorrichtung zur Verfügung zu stellen, wobei eine robuste und zuverlässige Realisierung einer Ausgleichsbewegung preiswert realisierbar sein soll.

Die Erfindung löst diese Aufgabe, indem sie eine Vorrichtung zur Bearbeitung von Werkstücken zur Verfügung stellt, welche ein erstes und ein zweites Bearbeitungselement umfasst, wobei eine Schwenkachse vorgesehen ist, um welche die Bearbeitungselemente mittels Ausleger schwenkbar gelagert sind und wobei ein erster Antrieb zur Bewegung der Vorrichtung um die Schwenkachse und ein zweiter Antrieb zur Ausführung einer relativen Bewegung beider Bearbeitungselemente untereinander vorgesehen ist. Es ist außerdem ein Wegbegrenzungsmittel vorgesehen, mittels dessen bei einer Schwenkbewegung der Vorrichtung mittels des ersten Antriebs um die Schwenkachse die Schwenkbewegung begrenzbar ist. Die Vorrichtung dient zur Umsetzung umformtechnischer Fügeprozesse, insbesondere Clinchen und Stanznieten, sowie thermischer Fügeprozesse wie Widerstandspunktschweißen, Widerstandspressschweißen, Handlingprozesse, Prägeprozesse oder Schraub- und Einpressprozesse. Die Ausleger zur Aufnahme der Bearbeitungselemente sind an einem ersten und zweiten Chassis angeordnet.

Im Gegensatz zu den aus dem Stand der Technik bekannten Kurbelantriebslösungen ohne Wegbegrenzung kann es bei dieser Lösung nicht vorkommen, dass bei der Anstellbewegung zum Werkstück der obere Totpunkt der Kurbel überschritten wird, was die zuvor erwähnte Endlosbewegung zur Folge haben würde. Dies kann im Betrieb immer beispielsweise dann vorkommen, wenn das Blech oberhalb der maximal erreichbaren Position der Kurbel liegt. Der Motorwinkel wird mittels der erfindungsgemäßen Lösung derart begrenzt, dass die Vorrichtung bei einem Moment mit definiertem Vorzeichen entweder in eine erste Richtung oder in eine der ersten Richtung entgegen gesetzte zweite Richtung bewegt werden kann. Die Bewegung der Vorrichtung ist ausschließlich innerhalb der Wegbegrenzung möglich. Die Bewegungsrichtung und das Ansteuermoment sind damit eindeutig einander zuordenbar, so
dass sich die Komplexität der Vorrichtung und die Komplexität bei der Ansteuerung reduziert. Einem positiven Ansteuermoment (z.B. Ansteuerstrom positiv) kann somit beispielsweise eindeutig eine Aufwärtsbewegung zugeordnet werden und einem negativen Ansteuermoment (z.B. Ansteuerstrom positiv) kann somit beispielsweise eindeutig eine Abwärtsbewegung zugeordnet werden.

Der zuvor geschilderte Fall, dass bei einem positiven Moment sowohl eine Aufwärts- als auch eine Abwärtsbewegung auftreten kann, oder dass bei einem negativen Moment sowohl eine Abwärts- als auch eine Aufwärtsbewegung auftreten kann, wird hierdurch ausgeschlossen. Zusätzliche Sensorik und Software zur Erkennung der Bewegungsrichtung entfällt. Die Bewegungsrichtung ist bereits aufgrund des bekannten Ansteuermomentes definiert. Die geringere Komplexität und die fehlende Sensorik machen die Gesamtanordnung robuster und preiswerter.

Die Vorrichtung wird derart betrieben, dass zunächst in einem ersten Schritt eine Annäherung des ersten Bearbeitungselementes mittels des ersten Antriebes zum Beispiel an ein Werkstück erfolgt. Die Annäherung des zweiten Bearbeitungselementes an das Werkstück mittels des zweiten Antriebs erfolgt vorzugsweise dann, wenn das erste Bearbeitungselement am Werkstück anliegt. Sofern das erste Bearbeitungselement an einem Wegbegrenzungsmittel zum Anliegen kommt, oder nach Abschluss eines Bearbeitungsvorganges, welcher mittels beider Verbindungsmittel durchgeführt wurde, erfolgt das entfernen des ersten Bearbeitungsmittel mittels des ersten Antriebs vom Werkstück. Zur Realisierung dieses Verfahrens ist eine zusätzliche Einrichtung, insbesondere eine SPS-Steuerung vorgesehen.

Zumindest ein Antrieb wird dabei mittels Momentenregelung betrieben. Unter Momentenregelung wird im Sprachgebrauch der Antriebstechnik die Regelung des Motorstromes verstanden. Es besteht im Allgemeinen ein konstanter. Zusammenhang zwischen dem Motorstrom und den Motordrehmoment (die Drehmomentkraftkonstante wird im Motordatenblatt angegeben), so dass die Regelung des Motorstromes zu einer hinreichend genauen Regelung des Motordrehmomentes ausgenutzt wird. Der Vorteil liegt in der Regelung des Momentes mittels des Motorstromes. Zur Regelung des Stromes bzw. die winkelabhängige Bestromung der Motorwicklungen (Kommutierung), ist der Stromistwert und die aktuelle Rotorposition maßgeblich. Für die Erfassung der Rotorposition ist ein preiswerter Motorgeber mit geringen Genauigkeitsanforderungen wie z.B. ein Resolver ausreichend. Der Resolver hat zu dem den Vorteil, dass er flacher baut als ein Geber für hohe Genauigkeitsanforderungen wie z.B. ein optischer Inkrementalgeber. Der frei werdende Bauraum kann dadurch für eine Motorbremse ausgenutzt werden. Ein weiterer Vorteil der Momentenregelung resultiert aus der Tatsache, dass sie bei der Schweißzangenapplikation im Vergleich zur Lageregelung bessere Ergebnisse liefert. Die Lageregelung erfordert bei schwingungsfähigen und spielbehaftetem Systemen, wie sie bei der Schweißzange vorliegen, einen lastseitigen Geber, damit die Steuerung bezüglich der tatsächlichen Bewegungen der Last informiert ist. Wird nur mit dem Motor gearbeitet, ist eine schwingungsfreie. Positionierung nicht möglich. Der Antriebslieferant hat in der Regel keine Möglichkeit an der Zange einen lastseitigen Geber anzubringen und damit müsste die schwingungsbehaftete Positionierung in Kauf genommen werden. Bei der Momentenregelung kann in Analogie zur pneumatischen Druckregelung die Stellgröße (der Motorstrom) konstant angestellt und die Zange auf den Anschlag (Blech) positioniert werden.

Zumindest ein Antrieb umfasst einen Signalgeber, wobei die vom Geber gelieferten Daten zur Ermittlung der Bewegung zumindest eines Verbindungsmittels verarbeitet werden. Es können optional per Software Lagegrenzwerte zusätzlich überwacht werden. Alternativ kann der Lageistwert für den Antrieb unter Berücksichtigung des Betriebsstromes und/oder der Betriebsspannung ermittelt wird, wodurch man auf eine Lageerfassung vollständig verzichten und Kosten einsparen kann.

Bevorzugt wird ein Getriebe zwischen dem ersten Antrieb und dem ersten Ausleger vorgesehen, welches das Wegbegrenzungsmittel für das erste Bearbeitungsmittel umfasst Diese Lösungsvariante führt zu einer sehr kompakten Bauweise. Trennt man Getriebe und Wegbegrenzungsmittel, so können beide Komponenten unabhängig voneinander Montiert werden, wobei eine Wegbegrenzung nachrüstbar ist.

Vorzugsweise wird das Getriebe mittels einer Kurbel und eines Kraftübertragungsmittels realisiert, welches mit der Kurbel verbunden ist, wobei zumindest ein Wegbegrenzungsmittel an der Kurbel und/oder am Kraftübertragungsmittel vorgesehen ist, um die Bewegungsfreiheit der Kurbel oder des Kraftübertragungsmittels zu begrenzen. Je nach Anwendungsfall und Vorrichtungsabmessungen kann somit ein speziell für den Anwendungsfall maßgeschneidertes Getriebe verwendet werden. Bevorzugt bildet jedoch das Wegbegrenzungsmittel einen integralen Bestandteil des Getriebes, so dass keine weiteren Wegbegrenzungsmaßnahmen an der Vorrichtung selbst erforderlich werden.

Dies trägt zu einer kompakten und modularen Bauweise der Vorrichtung bei. Bei dieser Lösung können beispielsweise auch zwei Wegbegrenzungsmittel an den Totpunkten der Kurbel vorgesehen werden, um das Kraftübertragungsmittel oder die Kurbel in der Bewegungsfreiheit zu begrenzen. Dies bedeutet, dass das Kraftübertragungsmittel in einer ersten Richtung von seinem Nullpunkt bis maximal zum Totpunkt bewegt werden kann. Gleiches gilt für die der ersten Bewegungsrichtungen entgegen gesetzte Bewegungsrichtung. Durch das Wegbegrenzungsmittel kann somit das Kraftübertragungsmittel zwischen den beiden zuvor genannten Totpunkten bewegt werden, wobei der ersten Bewegung ein erstes Drehmoment und der zweiten Bewegung ein zweites Drehmoment fest zuordenbar ist. Hierdurch kann beispielsweise im Rahmen der Ansteuerung dem Drehmoment eine eindeutige Bewegungsrichtung zugeordnet werden. Spezielle Sensorik zur Erkennung der Bewegungsrichtung wird überflüssig.

Besonders bevorzugt handelt es sich bei dem Kraftübertragungsmittel um ein Gestänge in Form einer Pleuelstange, welche zwischen zwei Anschlägen beweglich angeordnet ist. In Verbindung mit einer Kurbel kann die Pleuelstange zur Realisierung einer Aufwärts- und/oder Abwärtsbewegung eines Bearbeitungselementes verwendet werden. Diese Art der Realisierung ist besonders einfach, wenig wartungsanfällig und preiswert.

Das Kraftübertragungsmittel umfasst vorzugsweise ein Bewegungsdämpfungsmittel oder Bewegungsbegrenzungsmittel, mittels dessen die Bewegung des Kraftübertragungsmittels gedämpft bzw. begrenzt werden kann, indem das Bewegungsdämpfungsmittel mit einem an der Vorrichtung angeordneten Anschlag interagiert. Das Wegbegrenzungsmittel für die Schwenkbewegung der Vorrichtung kann an der Kurbel und/oder am Chassis angeordnet sein. Es wird hier auf die nachfolgenden Ausführungsbeispiele verwiesen, welche zeigen, dass eine Wegbegrenzung prinzipiell durch Anordnung des Wegbegrenzungsmittels an dem Chassis der Vorrichtung oder durch Anordnung eines Wegbegrenzungsmittels am Getriebe realisierbar ist.

Ein Wegbegrenzungsmittel ist derart angeordnet, das bei einem ersten Antriebsmoment für den ersten Antrieb mit ersten Vorzeichen eine erste Bewegung der Vorrichtung und bei einem zweiten Antriebsmoment für den ersten Antrieb mit dem zweiten Vorzeichen eine der ersten Bewegung der Vorrichtung entgegen gesetzte Bewegung der Vorrichtung bewirkt wird, oder
wobei bei dem ersten Antriebsmoment für den ersten Antrieb mit ersten Vorzeichen eine der ersten Bewegung der Vorrichtung entgegen gesetzt Bewegung der Vorrichtung bewirkt wird und bei dem zweiten Antriebsmoment für den ersten Antrieb mit zweitem Vorzeichen eine der ersten Bewegung der Vorrichtung entsprechende Bewegung der Vorrichtung bewirkt wird. Der hieraus resultierende Vorteil liegt darin, dass die Bewegungsrichtung des Antriebsmomentes einer mechanischen Bewegung direkt zuordenbar ist.

Vorzugsweise sind die Antriebe mittels Servomotoren realisiert, wobei die Servomotoren ein Signalerzeugungsmittel, insbesondere zur Kommutierung und/oder zur Drehzahlmessung umfassen. Die Servomotoren ermöglichen eine geregelte Bewegungsausführung, was bei Anwendungen, beispielsweise im Kfz-Bereich, unverzichtbar ist.

Alternativ könnte zumindest ein Antrieb mittels eines geberlosen Servomotors realisiert sein,
wobei eine Einrichtung vorgesehen ist, welche die Rotorposition unter Berücksichtigung der Beziehung der Motor-EMK (Elektromagnetische Kraft) und/oder der Ausrichtung zwischen Stator und Permanentmagneten des Rotors ermittelt, beispielsweise unter Verarbeitung des Ansteuerstromes und der Ansteuerspannung. Bei dieser Lösung könnte weitere Sensorik eingespart werden, insbesondere Sensorik zur Ermittlung des Rotorlagewinkels. Es könnte der Rotorwinkel auch rein rechnerisch ermittelt werden, beispielsweise unter Berücksichtigung der von der Rotorlage abhängigen magnetischen Flussdichte im Motor. Auch wäre die Rotorlage unter Berücksichtigung der am Motor anliegenden Spannung bzw. des dem Motor zugeführten Stromes ermittelbar.

Die Ansteuerung der Antriebe der Vorrichtung erfolgt mittels einer Steuereinrichtung, welche für die Betriebsart Momentenregelung mit Zeitsteuerung geeignet ist. Der Momentensollwert wird für eine vorher definierte Zeitspanne der Steuerung vorgegeben. Die Zeitspanne kann so dimensioniert werden, dass der größtmögliche Elektrodenweg gefahren werden kann. Die Ermittlung der Zeitspanne erfolgt mittels eines Kalibriervorganges.

Je nachdem welche Bewegung die vom Bearbeitungselement umfasste Elektrode ausführen soll, wird mit positiven oder negativen Moment gearbeitet. Sollte das Werkstück fehlen oder die Vorrichtung zu weit vom Werkstück entfernt sein, so beschränkt die erfindungsgemäße Lösung den Bewegungsvorgang mechanisch. Die Steuerung erkennt anhand der Anschläge beziehungsweise der fehlenden Bewegung, dass die oberen Totpunkte erreicht wurden, ohne das eine Anstellbewegung realisiert werden konnte. Mittels der mechanischen Begrenzung kann der Motor nur eine Bewegung vollziehen, die kleiner als 360° ist. Die Position der mechanischen Anschläge ist bekannt (z.B. 0° und 170°). Das Blech befindet sich normalerweise zwischen den mechanischen Anschlägen (z.B. bei 140°). Erreicht der Motor nach Ablauf der eingestellten Zeit den Anschlag, erkennt das System, dass innerhalb des Elektrodenweges kein Blech vorhanden war, sonst wäre der Lageistwert kleiner als die Position des mechanischen Anschlages gewesen. In diesem Falle ist es dann möglich, einen entsprechenden Warnhinweis an den Bediener der Vorrichtung oder eine übergeordnete Systemsteuerung auszugeben, so dass Gegenmaßnahmen ergriffen werden können.

Die erfindungsgemäße Vorrichtung ist auch geeignet zum Betrieb in Verbindung mit Robotern, beispielsweise Schweißrobotern. Es wäre in diesem Falle möglich die Vorrichtung unter Verwendung der Robotersteuerung anzutreiben. Auch hydraulische und/oder pneumatische Antriebe könnten beispielsweise im Mischbetrieb mit Elektromotoren zum Einsatz kommen.

In folgendem werden nun anhand von Figuren grobschematisch die wesentlichen Aspekte der Erfindung gezeigt:
Figur 1 zeigt eine Seitenansicht der erfindungsgemäßen Vorrichtung.
Figur 2 zeigt den Bewegungshub der Elektroden.
Figur 3 zeigt eine Wegbegrenzung mittels des Pleuels.
Figur 4 zeigt eine Wegbegrenzung mittels der Kurbel (Excenter).
Figur 5 zeigt eine direkte Wegbegrenzung mittels des Chassis.

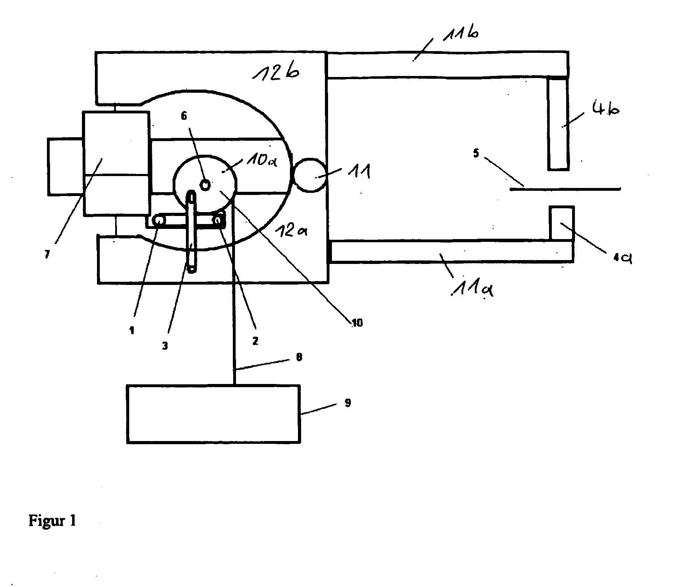

In Figur 1 ist eine Schweißzange dargestellt. Die Schweißzange umfasst folgende Bestandteile: eine erste Schweißelektrode 4B und eine zweite Schweißelektrode 4A. Zwischen den beiden Elektroden 4A und 4B ist ein Werkstück 5 angedeutet. Dieses Werkstück 5 könnte beispielsweise durch zwei miteinander zu verbindende Bleche 5 repräsentiert sein. Die erste Elektrode 4B ist an einem ersten Ausleger 11B befestigt, die zweite Elektrode 4A ist an einem zweiten Ausleger 11A befestigt. Die Ausleger 11A bzw. 11B sind am Chassis 12A, 12B der Vorrichtung fest montiert. Das Chassis 12A, 12B umfasst einen zentralen Drehpunkt 11 und ist zweiteilig ausgebildet. Um diesen zentralen Drehpunkt 11 kann das erste Chassisteil 12A-zusammen mit dem Ausleger 11A und der Schweißelektrode 4A um den Drehpunkt bewegt werden. Gleiches gilt für das zweite Teil des Chassis 12B, welches zusammen mit dem Ausleger 11B und der Elektrode 4B ebenfalls um denselben Drehpunkt 11 beweglich angeordnet ist. Für die Relativbewegung zwischen beiden Chassisteilen 12A und 12B ist ein Haupthubzylinder 7 verantwortlich. Dieser Haupthubzylinder 7 ist zwischen beiden Chassisteilen 12A und 12B angeordnet und bewirkt die um den Drehpunkt 11 gewünschte Relativbewegung beider Ausleger 12A, 12B und Elektroden 4A, 4B. Je weiter der Haupthub 7 eine lineare Auslenkung erfährt, desto näher werden die Elektroden 4A, 4B mittels der Ausleger 11 A und 11 B zueinander geführt, so dass letztlich das Werkstück 5 zwischen beiden Elektroden 4A, 4B eingeklemmt wird. Ein zusammenziehen des Haupthubzylinders 7 bewirkt das auseinanderfahren beider Elektroden 4A und 4B, so dass sich diese wiederum vom Werkstück 5 lösen. Sofern der Haupthubzylinder 7 fixiert wird, bewirkt dies auch eine Fixierung des Abstandes beider Elektroden 4A und 4B. In diesem Falle ist es jedoch möglich die Gesamtanordnung, bestehend aus den Chassisteilen 12A und 12B, den Auslegern 11A und 11B und den Elektroden 4A und 4B um die zentrale Drehachse 11 zu bewegen und den Elektrodenabstand beizubehalten. Für diese Bewegung der Gesamtanordnung um die zentrale Drehachse 11 ist der sogenannte Ausgleichsantrieb 10 bestehend aus Achse 6, Scheibe 10A und Pleuel 3 verantwortlich. Mittels des Ausgleichsantriebes 10 ist es möglich beispielsweise zunächst die Elektrode 4A an das Werkstück 5 anzunähern. Umgekehrt könnte auch zunächst die Elektrode 4B an das Werkstück 5 angenähert werden. Wenn zumindest eine Elektrode 4A oder 4B am Werkstück anliegt, wird mittels des Haupthubzylinders 7 eine Zusammenführung beider Elektroden 4A,B für den Schweißvorgang herbeigeführt. An der Motorwelle 6 (Ausgleichsmotorwelle) ist ein Kurbelgetriebe mittels einer drehbaren Scheibe 10 A und einem Pleuel 3 realisiert. Dreht sich die Scheibe 10 A um die Motorachse 6, bewirkt das am äußeren Umfang der Scheibe angeordnete Pleuel 3, welches mit einem ersten Chassisteil 12A, 12B verbunden ist, eine Bewegung der gesamten Anordnung um die zentrale Drehachse 11. Die Bewegung des Pleuels 3 wird begrenzt durch das erfindungsgemäße Wegbegrenzungsmittel 1, 2 in Form eines ersten und eines zweiten Anschlages für das Pleuel 3. Der Anschlag ist so konzipiert, dass die Scheibe niemals eine volle 360 Grad Drehung vollziehen kann. Beispielsweise könnten die Wegbegrenzungsmittel 12 derart angeordnet sein, dass die Drehung der Scheibe in eine Richtung auf einen Bereich zwischen Null und annähernd 180 Grad oder zwischen Null und annähernd 90 Grad begrenzt wird. Obgleich hier die Wegbegrenzungsmittel 1,2 zur Begrenzung der Pleuelbewegung seitlich des Pleuels 3 gezeigt sind, könnten diese auch an der Scheibe 10 angeordnet sein. Vorteil dieser Lösung wäre, dass die Scheibendrehung unmittelbar und nicht mittelbar begrenzt wird. Die Ansteuerung des Ausgleichsmotors erfolgt mittels einer Steuerung 9 bzw. eines Antriebsregelverstärkers 9 mit integrierter Steuerung 9. Ausgleichsmotor 10A und Steuerung 9 sind mittels einer Geber- und/oder Versorgungsleitung 8 verbunden. Die Versorgungsleitung 8 dient zur Versorgung des Ausgleichsantriebes 10 mit elektrischer Leistung, die Geberleitung dient zur Kommunikation des Ausgleichsantriebes 10 mit der Steuerung 9, insbesondere zur Übermittlung von motorspezifischen Kenndaten wie beispielsweise der Drehzahl. Auch kombinierte Versorgungs- und Signalleitungen 8 sind denkbar. Wird die bereits zuvor erwähnte geberlose Servomotorlösung verwendet, so wird die Lage des Rotors mittels der Steuerung 9 rechnerisch aus den Betriebsdaten des Motors 10 ermittelt.

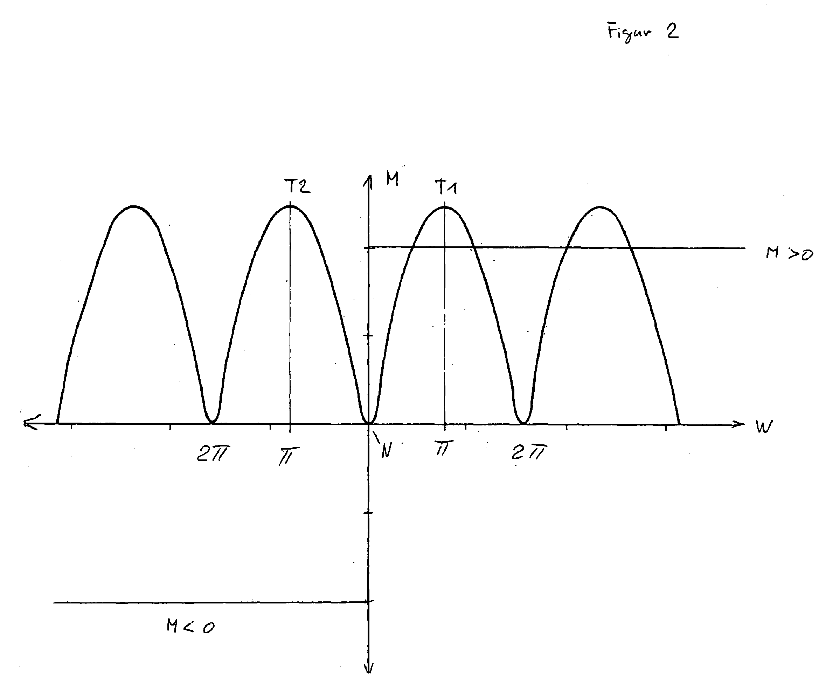

In Figur 2 ist ein Diagramm gezeigt, welches prinzipiell den Effekt der erfindungsgemäßen Vorrichtung auf den Elektrodenweg aufzeigt. An der Abszisse ist der Motorwinkel "w" abgetragen, an der Ordinate ist das Motormoment "M" aufgetragen. Das Diagramm umfasst vier Quadranten, wobei der erste Quadrant für ein positives Motormoment (M > 0) und der dritte Quadrant für ein negatives Motormoment (M < 0) steht. Beim positiven Motormoment (Quadrant rechts oben) ist deutlich zu sehen, dass vom Nullpunkt des Motorwinkels aus betrachtet, der Elektrodenweg zunächst in positiver Richtung ansteigt um bei unverändertem Motormoment am ersten Totpunkt T1 eine Richtungsumkehr in Entgegengesetzter Richtung vorzunehmen (Aufwärtsbewegung und Abwärtsbewegung der Elektroden). Bleibt das Motormoment unverändert (M > 0), so verläuft der Elektrodenweg gemäß der Kurve aufwärts und abwärts. In der Praxis bedeutet dies, dass nach Überschreiten des oberen Totpunktes T1 die Elektrode, welche zuvor beispielsweise dem Werkstück 5 angenähert wurde, nun vom Werkstück entfernt wird. Nach einer vollständigen Umdrehung der Kurbelwelle (2 PI) wiederholt sich der Vorgang im Prinzip endlos, solange das Motormoment unverändert positiv bleibt.

Bei negativen Motormoment (siehe Quadrant links unten und links oben) gilt das zuvor gesagte ebenfalls, jedoch in entgegen gesetzter Richtung. Das heißt bei negativem Motormoment (M < 0) folgt in diesem konkreten Beispiel zunächst ein Elektrodenweg in positiver Richtung um dann ebenfalls bei dem zweiten Totpunkt T2 einen Richtungswechsel vorzunehmen. Auch hier würde ohne Beachtung des oberen Totpunktes T2 im Prinzip eine endlose Aufwärtsbewegung und Abwärtsbewegung der Elektroden resultieren.

Die Erfindung bewirkt, dass bei positivem Motormoment (M > 0) der Elektrodenweg begrenzt wird. Diese Begrenzung ist in Form einer senkrechten Linien, welche durch den Totpunkt T1 verläuft verdeutlicht. Bei negativen Motormoment kommt die Begrenzung am Totpunkt T2 zum Tragen. Die Totpunkte T1/T2 werden mittels der erfindungsgemäßen Wegbegrenzungsmittel 1 und 2 mechanisch realisiert.

Im folgenden wird nun nochmals kurz beschrieben, wie die erfindungsgemäße Vorrichtung arbeitet. Die folgende Beschreibung erfolgt unter der Annahme, dass der Schwerpunkt der Schweißzange derart bemessen ist, dass die Schweißzange bei stromlosem Ausgleichsmotor 10 den Pleuel (Bild 1, Bezugszeichen 3) an den Anschlag 1 andrückt. Zunächst wird der Ausgleichsmotor 10 von der Steuerung 9 mittels eines ersten (Positiven oder negativen) Momentes beaufschlagt. Dies bewirkt, dass die Elektrode 4A an das Werkstück 5 herangeführt wird. Falls kein Werkstück 5 vorhanden sein sollte, bleibt die Elektrode 4A an einem Totpunkt T1/2 stehen, welcher mittels eines Anschlages 1/2 definiert ist. Befindet sich ein Blech 5 innerhalb eines Elektrodenweges zwischen dem Nullpunkt N (Figur 2) und einem der Totpunkte T1 oder T2, so kann die Referenzelektrode an das Blech angedrückt werden. Befindet sich kein Blech 5 innerhalb eines Elektrodenweges zwischen dem Nullpunkt N und einem der Totpunkte T1 oder T2, so wird der Elektrodenweg automatisch auf den Weg bis zu einem der Totpunkte T1 oder T2 begrenzt.

Bleibt die Elektrode zwischen beiden Endpositionen (Anschlag 1 oder 2) stehen, so kann davon ausgegangen werden, dass sie an ein Blech angestoßen ist. Ist dies nicht der Fall, so kann davon ausgegangen werden, dass kein Blech vorhanden ist Wurde ein vorhandenes Blech erkannt, so wird mittels des Haupthubzylinders 7 ein Krafthub durchgeführt, das heißt der Hauptzylinder 7 wird aufgefahren, was wiederum das zusammenführen der Elektroden 4A, 4B bewirkt, so dass das Werkstück 5 zwischen beiden Elektroden eingeklemmt ist und ein Schweißpunkt gesetzt werden kann. Anschließend wird der Hauptzylinder zugefahren, was das lösen vom Werkstück 5 bewirkt und die Elektrode 4A wird mittels eines negativen Momentes wieder vom Werkstück entfernt, so dass die Schweißzange beispielsweise mittels eines Roboters in ihrer Position verändert werden kann.

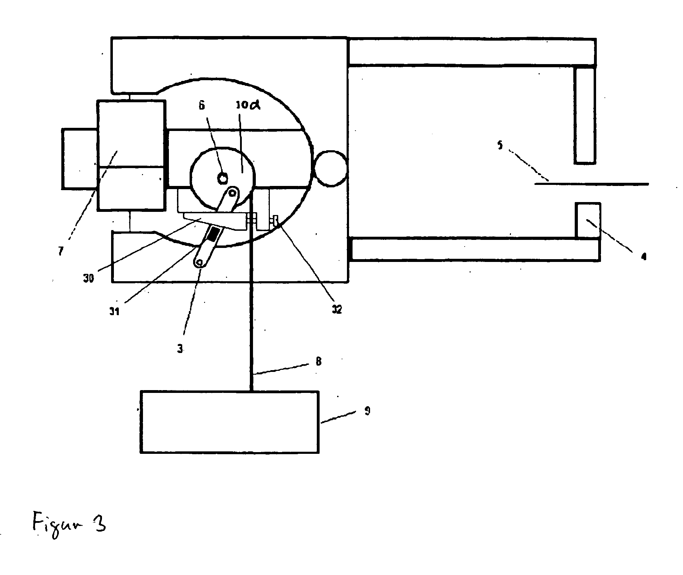

Die Figur 3 zeigt eine Wegbegrenzung, welche unter Verwendung des Pleuels realisiert ist. Bezüglich der Bezugszeichenerläuterung wird auf die Beschreibung zu Figur 1 verwiesen. Der Hub der Pleuelstange 3 wird hier mittels eines Wegbegrenzungsmittels 31, welches auch eine abdämpfende Funktion haben kann, und mittels eines keilförmigen Anschlages 30 definiert. Der Hub der Pleuelstange 3 kann durch Verstellen des keilförmigen Anschlages 30 mittels einer Stellschraube 32 variiert werden.

Die Figur 4 zeigt eine Wegbegrenzung, welche unter Verwendung der Kurbelscheibe 10a realisiert ist. Bezüglich der Bezugszeichenerläuterung wird auf die Beschreibung zu Figur 1 verwiesen. Der Drehwinkel der Kurbelscheibe 10a wird mittels eines einzigen an der Kurbelscheibe angeordneten Bolzens 40 begrenzt, weil sich dieser innerhalb einer Ausnehmung (hier V-förmig) einer Anschlagplatte 42 bewegt. Figur 4a zeigt eine alternative Lösung mit zwei an der Kurbelscheibe 10a angeordneten Bolzen 40, welche sich um den Vorsprung (hier V-förmig) einer Anschlagplatte 42 bewegen. Auch hier kann der Hub der Pleuelstange 3 mittels einer Stellschraube 41 eingestellt werden.

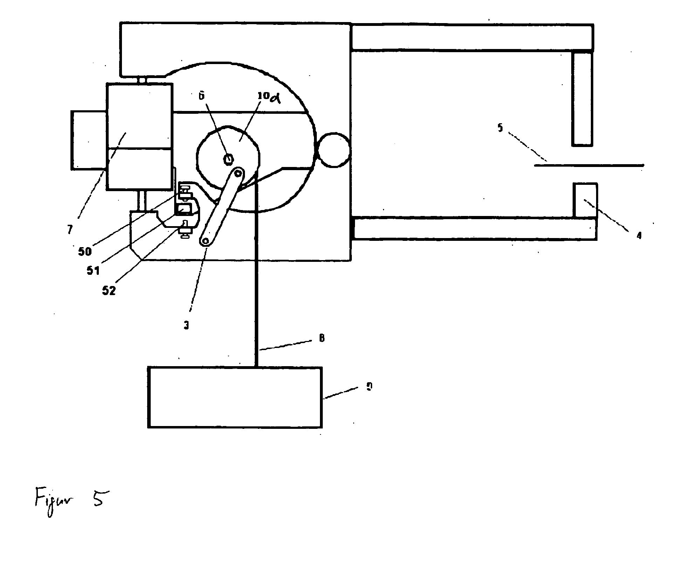

Die Figur 5 zeigt eine Wegbegrenzung, welche unter Verwendung der Kurbelscheibe 10a realisiert ist. Bezüglich der Bezugszeichenerläuterung wird auf die Beschreibung zu Figur 1 verwiesen. Der Hub der Pleuelstange 3 wird direkt mittels zweier Begrenzungen 50, 51 und eines festen Anschlages 50 definiert, wobei auch hier eine Stellschraube 52 zur Hubbegrenzung vorgesehen ist.

## Patentansprüche

1. Vorrichtung für umformtechnische Fügeprozesse, insbesondere Clinchen und Stanznieten, sowie thermische Fügeprozesse wie Widerstandspunktschweißen, Widerstandspressschweißen, Handlingprozesse, Prägeprozesse oder Schraub- und Einpressprozesse, wobei die Vorrichtung ein ersten und zweites Chassis (12a,b) und an den Chassis (12a,b) angeordnete erste und zweite Ausleger (11a,b) zur Aufnahme von Bearbeitungselementen (4a,b) umfasst, wobei weiter umfasst ist eine Schwenkachse (11), um welche die Vorrichtung schwenkbar gelagert ist,
**dadurch gekennzeichnet, dass**
ein Wegbegrenzungsmittel (1,2) an der Vorrichtung vorgesehen ist, mittels dessen das Ausmaß der Schwenkbewegung der Vorrichtung um die Schwenkachse (11) beeinflussbar ist.

2. Vorrichtung nach Anspruch 1, wobei ein erster Antrieb (10) zur Bewegung der Vorrichtung um die Schwenkachse (11) und ein Getriebe (3,6) zwischen dem ersten Antrieb (10) und einem Chassis (12a, 12b) der Vorrichtung vorgesehen ist, dessen Bewegungshub mittels des Wegbegrenzungsmittels (1,2) begrenzbar ist.

3. Vorrichtung nach Anspruch 2, wobei das Getriebe (3,6) mittels einer Kurbel (10a) und mittels eines Kraftübertragungsmittels (3) realisiert ist, welches mit der Kurbel (10a) verbunden ist.

4. Vorrichtung nach Anspruch 3, wobei das Kraftübertragungsmittel (3) ein Gestänge in Form einer Pleuelstange (3) ist.

5. Vorrichtung nach Anspruch 3 oder 4, wobei das Kraftübertragungsmittel (3) ein Bewegungsdämpfungsmittel oder Bewegungsbegrenzungsmittel (31) umfasst, mittels dessen die Bewegung des Kraftübertragungsmittels (3) gedämpft werden kann, indem das Bewegungsdämpfungsmittel (31) mit einem an der Vorrichtung angeordneten Anschlag (30) interagiert.

6. Vorrichtung nach einem der Ansprüche 3 bis 5, wobei das Wegbegrenzungsmittel für die Schwenkbewegung der Vorrichtung (1,2) an der Kurbel (10a) und/oder am Chassis (12a,b) angeordnet ist.

7. Vorrichtung nach einem der vorhergehenden Ansprüche, wobei das Wegbegrenzungsmittel (1,2) derart angeordnet ist, dass bei einem ersten Antriebsmoment mit erstem Vorzeichen für den ersten Antrieb (10) eine erste Bewegung der Vorrichtung und bei einem zweiten Antriebsmoment mit zweitem Vorzeichen für den ersten Antrieb (10) eine der ersten Bewegung der Vorrichtung entgegen gesetzte Bewegung der Vorrichtung bewirkt wird oder wobei bei dem erstem Antriebsmoment mit erstem Vorzeichen für den ersten Antrieb (10) eine der ersten Bewegung der Vorrichtung entgegen gesetzte Bewegung der Vorrichtung bewirkt wird und bei dem zweiten Antriebsmoment mit zweitem Vorzeichen für den ersten Antrieb (10), eine der ersten Bewegung der Vorrichtung entsprechende Bewegung der Vorrichtung bewirkt wird.

8. Vorrichtung nach einem der vorhergehenden Ansprüche 2 bis 7, wobei der erste Antrieb (10) mittels eines Servomotors realisiert ist, wobei der Servomotor ein Signalerzeugungsmittel zur Kommutierung umfasst.

9. Vorrichtung nach einem der vorhergehenden Ansprüche 2 bis 8, wobei der erste Antrieb (7) mittels eines geberlosen Servomotors realisiert ist, wobei eine Einrichtung (9) vorgesehen ist, welche die Rotorposition unter Berücksichtigung des Motorbetriebsstromes und/oder der Motorbetriebsspannung ermittelt.

10. Vorrichtung nach einem der vorhergehenden Ansprüche 2 bis 9; wobei ein zweiter Antrieb (7) zur Ausführung einer relativen Bewegung zwischen beiden Auslegen
(11a,b) um die Schwenkachse (11) vorgesehen ist, wobei zumindest einer der Antriebe (7,10) pneumatisch, hydraulisch oder elektrisch realisiert ist.

11. Verfahren zum Betrieb einer Vorrichtung für umformtechnische Fügeprozesse, insbesondere Clinchen und Stanznieten, sowie thermische Fügeprozesse wie Widerstandspunktschweißen, Widerstandspressschweißen, Handlingprozesse, Prägeprozesse oder Schraub- und Einpressprozesse, mit einem ersten und einem zweiten Bearbeitungselement (4a,b) sowie mit einem ersten und einem zweiten Antrieb (7,10), mit einer Steuerung (9) und mit Wegbegrenzungsmittel (1,2), wobei die Bewegung zumindest eines Bearbeitungselementes (4a) mittels des Wegbegrenzungsmittels (1,2) begrenzt wird.

12. Verfahren nach Anspruch 11, wobei folgende Verfahrensschritte umfasst sind:
a) Bewegung des ersten Bearbeitungselementes (4a) mittels des ersten Antriebes (10) in eine erste Richtung;
b) Bewegung des zweiten Bearbeitungselementes (4b) mittels des zweiten Antriebs (7) in eine der ersten Richtung entgegen gesetzte Richtung;
c) Bewegung des ersten Bearbeitungsmittels (4a) in die der ersten Richtung entgegen gesetzte Richtung, sobald das erste Bearbeitungsmittel (4a) am Wegbegrenzungsmittel (1,2) anliegt oder
d) Bewegung des ersten Bearbeitungsmittels (4a) in die der ersten Richtung entgegen gesetzte Richtung, sobald ein mittels beider Bearbeitungsmittel (4a,b) durchgeführter Bearbeitungsvorgang äbgeschlossen ist.

13. Verfahren gemäß einem der vorhergehenden Verfahrensansprüche, wobei zumindest ein Antrieb (7,10) mittels einer mittels der Steuerung (9) durchgeführten Momentenregelung betrieben wird.

14. Verfahren gemäß einem der vorhergehenden Verfahrensansprüche, wobei zumindest ein Antrieb (7,10) einen Drehzahlgeber und/oder einen Winkelgeber umfasst und wobei die vom Geber gelieferten Daten zur Ermittlung des Lageistwertes von der Steuerung (9) verarbeitet werden.

15. Verfahren gemäß einem der vorhergehenden Verfahrensansprüche, wobei zumindest ein Antrieb (7,10) ohne Geber realisiert ist und der Lageistwert unter Berücksichtigung des Betriebsstromes und/oder der Betriebsspannung ermittelt wird.
